# EUROPEAN PATENT SPECIFICATION

(11) **EP 2 429 213 B1**
(45) Date of publication and mention of the grant of the patent: **16.11.2016**
(21) Application number: 11003753.8
(22) Date of filing: 06.05.2011
(51) Int. Cl.: H04R 1/02, F16B 5/06, F16B 21/07

(54) **Fixing mechanism**
Befestigungsmechanismus
Mécanisme de fixation

(30) Priority: 08.09.2010 TW 99130300
(43) Date of publication of application: 14.03.2012
(73) Proprietor: HannStar Display Corp., Taipei City, 114 (TW)
(72) Inventor: Wu, Tsung-Yin, Taoyuan City, 326 (TW); Wu, Chao-Hsiung, New Taipei City, 239 (TW)
(74) Representative: Hoefer & Partner Patentanwälte mbB

(56) References cited:
- EP-A1- 1 505 851
- GB-A- 2 450 349
- US-A- 4 318 208
- US-A1- 2003 059 077
- US-A1- 2008 031 485

## Description

The present invention relates to a fixing mechanism according to claims 1 and 15.

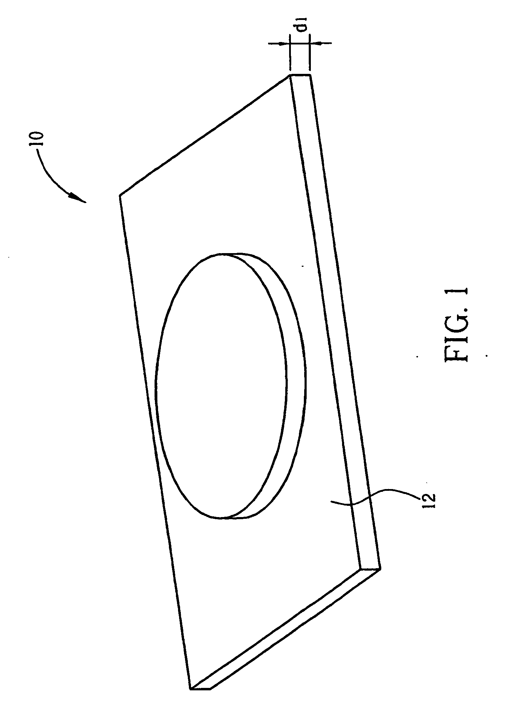

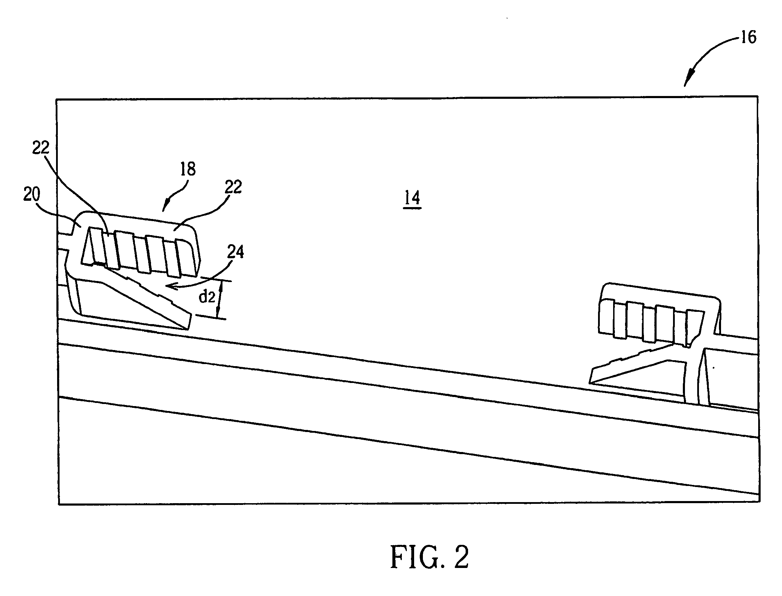

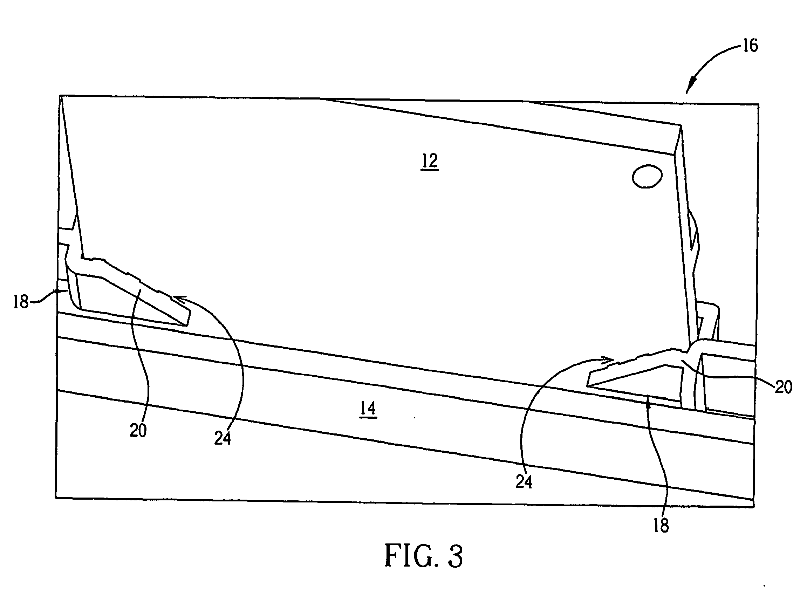

Please refer to FIG. 1 and FIG. 2. FIG. 1 illustrates a conventional speaker, and FIG. 2 illustrates a conventional fixing mechanism. As shown in FIG. 1, a conventional speaker 10 has a substrate 12, which is a rectangular plate. As shown in FIG. 2, a conventional fixing mechanism 16 is made of two clamping structures 18, and each clamping structure 18 has a slot 20 and a plurality of ribs 22. Each slot has an opening 24, such that two openings 24 face each other. The ribs 22 are respectively disposed on the sidewalls inside the openings 24. The slot 20 and the ribs 22 extend from a case 14. The slot 20 and the ribs 22 are formed integrally with the case 14 so as to be fastened to the case 14. Please refer to FIG. 3 with reference to FIG. 2. FIG. 3 illustrates a conventional speaker fastened to a conventional fixing mechanism. As shown in FIG. 2 and FIG. 3, the width d2 of the opening 24 of the slot 20 is substantially equal to the thickness d1 of the substrate 12, so that the substrate 12 can be inserted into the opening 24 of the slot 20, and the substrate 12 is fastened to the case 20 by the engagement of the ribs 22 in the opening 24. In addition, the length of the bottom of the opening 24 is substantially equal to the length of one side of the substrate 12, so that the substrate 12 can be fixed between the slots 20. However, vibration occurs when sounds come from the speaker in operation. Since the clamping structures and the case are formed integrally, they are made of plastic with certain rigidity and can not absorb the vibration easily. When
the case is used as the case of an LCD, the vibration of the speaker also makes the speaker come off from the clamping structure easily.

U.S. Patent Application Publication number US 2003/0059077 A1 discloses a speaker box mounting structure including a panel provided with a plurality of speaker mounting bosses, and a speaker box provided with a plurality of lugs. An engaging projection projects from each of the bosses. The engaging projection has an enlarged engagement head which is expansively and contractively deformable. An annular elastic damper is retained by each of the lugs. The elastic dampers are fitted over the engaging projection between each boss and the enlarged engagement head for fixing the speaker box to the panel.

U.S. Patent Application Publication number US 2008/0031485 A1 discloses an auxiliary fastening device for assisting in fastening a transducer such as a speaker on a base structure. Moreover, the auxiliary fastening device according to the invention is capable of isolating the vibration induced from the transducer to the base structure during operation.

European Patent Application Publication number EP 1 505 851 A1 discloses a supporting device supporting a sound generator in a housing. The supporting device comprises a bracket for carrying the sound generator and at least one fastening means for fastening the bracket to the housing. The fastening means consists of a guiding element engaging in the bracket and a fixing element for fixing the guiding element to the housing such that the bracket is slidably supported by the guiding element.

This in mind, the present invention aims at providing a fixing mechanism that solves the problem of the speaker coming off from the case due to its vibration.

This is achieved by a fixing mechanism according to claims 1 and 15. The dependent claims pertain to corresponding further developments and improvements.

As will be seen more clearly from the detailed description following below, the claimed fixing mechanism includes a first clamping structure, a first positioning pillar, a first buffering structure and a fixing structure. The first clamping structure is provided with a first through hole and connected to a first side of an object. The first positioning pillar is connected to a case. The first buffering structure is provided with a first positioning hole and has a first trench and a plurality of first protruding parts. The first trench surrounds a sidewall of the first buffering structure, so that the first through hole of the first clamping structure can be engaged with the first trench to fixate the first side of the object to the first buffering structure. The first positioning hole is disposed on a bottom surface of the first buffering structure, and a plurality of the first protruding parts are disposed on a sidewall of the first positioning hole, and the first positioning hole is used for engaging the first positioning pillar and the first protruding parts engage with the first positioning pillar, so that the first buffering structure is fixed to the first positioning pillar. The fixing structure is used for fastening the second side of the object on the case.

In the following, the invention is further illustrated by way of example, taking reference to the accompanying drawings. Thereof:
FIG. 1 illustrates a conventional speaker.
FIG. 2 illustrates a conventional fixing mechanism.
FIG. 3 illustrates a conventional speaker fastened to a conventional fixing mechanism.
FIG. 4 illustrates a side view of the fixing mechanism according to a first embodiment of the present invention.
FIG. 5 illustrates a top view of the object with the first clamping structure and the second clamping structure of the first embodiment.
FIG. 6 illustrates a cross section of the first buffering structure of the first embodiment of the present invention.
FIG. 7 is a section view of the fixing mechanism in FIG. 4 along line A-A'.
FIG. 8 illustrates another example of the first buffering structure of the fixing mechanism of the first embodiment of the present invention.
FIG. 9 illustrates a side view of a fixing mechanism according to a second embodiment of the present invention.

The fixing mechanism of the present invention is used to fasten an object onto a case. The case may be an electronic device displaying images, such as an MP4, TV, LCD, cell phone, PDAs or laptop, but it is not limited to these examples.

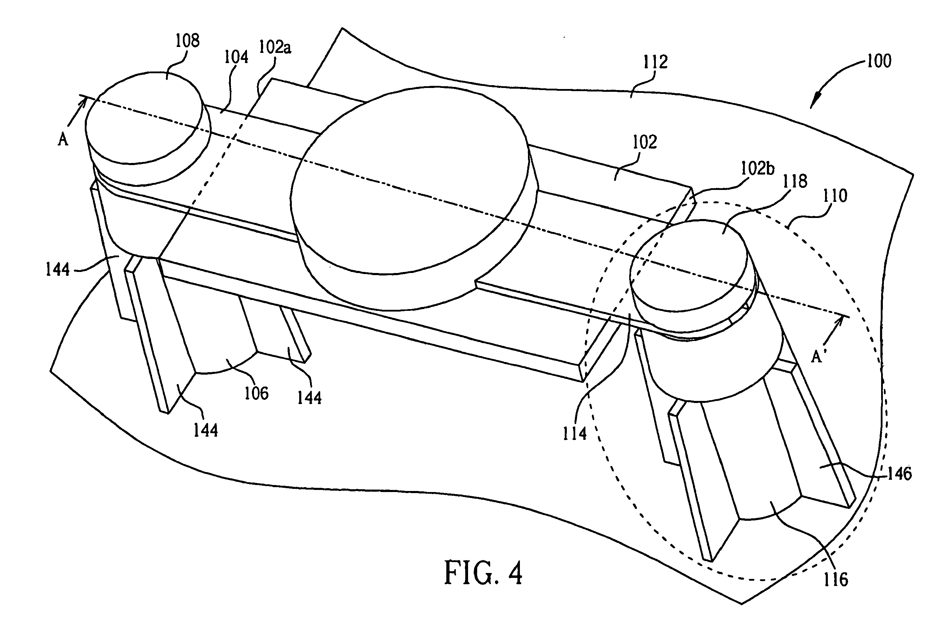

Please refer to FIG. 4. FIG. 4 illustrates a side view of the fixing mechanism according to a first embodiment of the present invention. As shown in FIG. 4, the object 102 has a first side 102a and a second side 102b, which is opposite to the first side 102a. The fixing mechanism 100 of the present embodiment includes a first clamping structure 104, a first positioning pillar 106, a first buffering structure 108 and a fixing structure 110. The first clamping structure 104 is connected to the first side 102a of the object 102, and the first positioning pillar 106 is connected to the case 112. The first buffering structure 108 is used for connecting the first clamping structure 104 to the first positioning pillar 106, so that the first side 102a of the object 102 is connected to the case 112. In addition, the fixing structure 110 is used for connecting the second side 102b of the object 102 to the case 112. In this embodiment, the fixing structure 110 includes a second clamping structure 114, a second positioning pillar 116 and a second buffering structure 118. The second clamping structure 114 is connected to the second side 102b of the object 102, and the second positioning pillar 116 is connected to the case 112. The second buffering structure 118 is used for fixing the second clamping structure 114 to the second positioning pillar 116, and thereby, the object 102 is connected to the case 112.

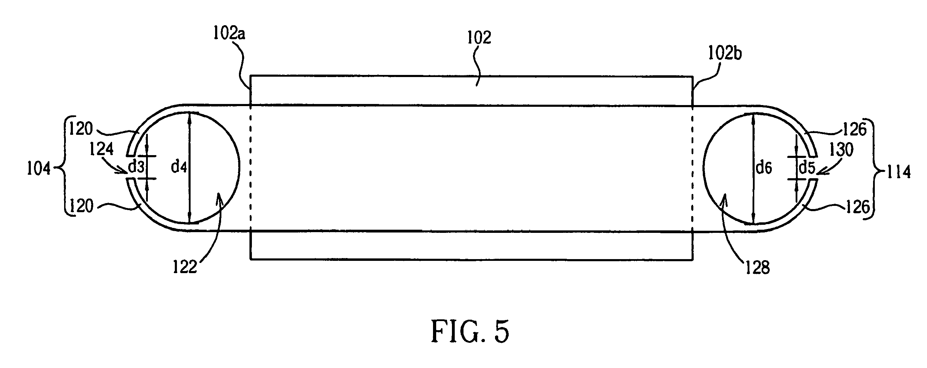

FIG. 5 illustrates the details of the first clamping structure and the second clamping structure. Please refer to FIG. 5, which illustrates a top view of the object with the first clamping structure and the second clamping structure of the first embodiment. As shown in FIG. 5, the first clamping structure 104 has two first clamping arms 120 to clamp the first buffering structure 108 therebetween, and each first clamping arm 120 extends outward from the first side 102a of the object 102, so that the first clamping structure 104 is provided with a first through hole 122 disposed between the first clamping arms 120. One end of each first clamping arm 120 is connected to the object 102 and the other ends of the first clamping arms 120 are not connected to each other but have a first opening 124. The width d3 of the first opening 124 is less than or equal to the hole diameter d4 of the first through hole 122. The second clamping structure 114 also has two second clamping arms 126, and each second clamping arm 126 extends outward from the second side 102b of the object 102, so that the second clamping structure 114 is provided with a second through hole 128 disposed between the second clamping arms 126. One end of each second clamping arm 126 is connected to the object 102 and the other ends of the second clamping arms 126 are not connected to each other but have a second opening 130. The width d5 of the second opening 130 is less than or equal to the hole diameter d6 of the second through hole 128. In addition, the first clamping structure 104, the second clamping structure 114, and the object 102 are formed integrally, but they are not limited to this. In order to connect the object 102 to the case 112, the first clamping structure 104 and the second clamping structure 114 are made of a material with a certain rigidity, such as a plastic material or a metal material, but they are not limited to this.

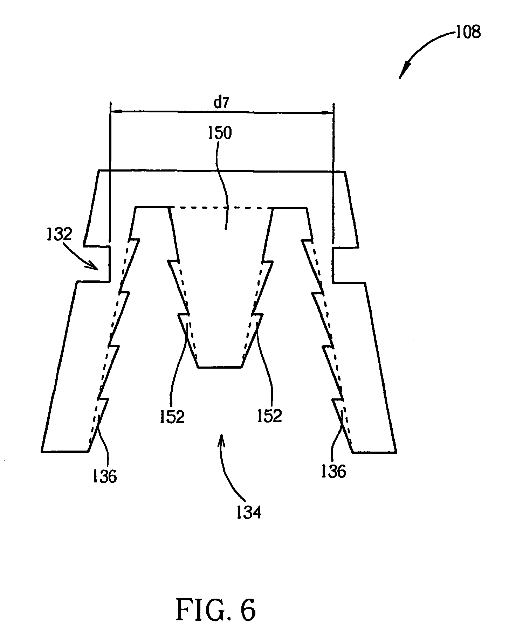

Please refer to FIG. 4, FIG. 5 and FIG. 6. FIG. 6 illustrates an example of a cross section of the first buffering structure according to the first embodiment of the present invention. Only the first buffering structure is taken for illustration because the first buffering structure and the second buffering structure have similar structure. As shown in FIG. 4, FIG. 5 and FIG. 6, the first buffering structure 108 is provided with a first positioning hole 134 and has a first trench 132. The first trench 132 surrounds a sidewall of the first buffering structure 108, so that it becomes an annular trench. The diameter d7 of the first buffering structure 108 within the first trench 132 roughly equals the hole diameter d4 of the first through hole 122, and the cross-sectional area of the first buffering structure 108 outside of the first trench 132 and parallel with the first trench 132 is larger than the area of the first through hole 122, so that the first through hole 122 of the first clamping structure 104 may engage with the first trench 132 to fasten the first side 102a of the object 102 on the first buffering structure 108. In addition, the first positioning hole 134 is disposed on a bottom surface of the first buffering structure 108, a region surrounded by the bottom surface of the first buffering structure 108. The first positioning hole 134 is used for engaging the top of the first positioning pillar 106. In addition, the first buffering structure 108 further includes a plurality of first protruding parts 136 located on an annular sidewall of the first positioning hole 134. In this embodiment, each first protruding part 136 may be in a form of an annular structure, encircling the annular sidewall of the first positioning hole 134, but they are not limited to this. The first protruding parts 136 of the present invention may be in a form of bumps, too, and provided on the annular sidewall of the first positioning hole 134. Or, each first protruding part 136 may be in a form of a barb to provide greater friction with respect to the first positioning pillar 106. The first protruding parts 136 of the present invention are not limited to barbs, and may also be in other geometric forms to be resilient and compressible, so that the first protruding parts 136 may be compressed to generate a greater frictional force to be able to engage with the first positioning pillar 106. Please note that the first buffering structure 108 of the present invention is made of a buffering material, such as rubber, but it is not limited to this. As a result, when the first positioning pillar 106 is inserted into the first positioning hole 134, the first protruding parts 136 engage with the first positioning pillar 106 due to the presence of a frictional force so that the first positioning pillar 106 is fixed in the first positioning hole 134, to more effectively fix the first buffering structure 108 to the first positioning pillar 106.

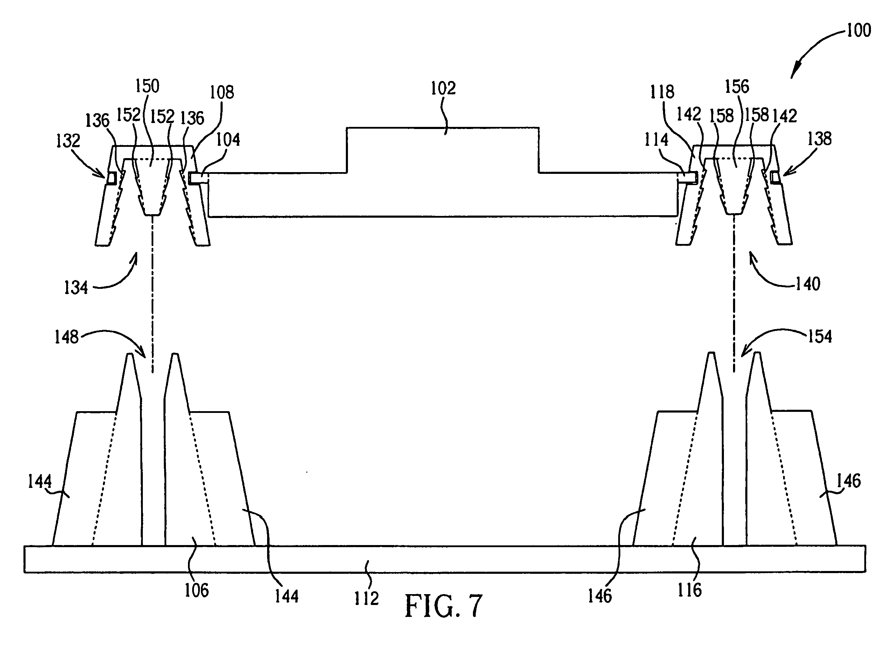

Please refer to FIG. 7 with reference to FIG. 4 and FIG. 6. FIG. 7 is a section view of the fixing mechanism in FIG. 4 along line A-A'. As shown in FIG. 6 and FIG. 7, similar to the first buffering structure 108, the second buffering structure 118 is provided with a second positioning hole 140 and has a second trench 138 surrounding a sidewall of the second buffering structure 118 and a plurality of second protruding parts 142. The second through hole 128 of the second clamping structure 114 is engaged with the second trench 138 to fasten the second side of the object 102 on the second buffering structure 118, and the second positioning hole 140 is disposed on a bottom surface of said second buffering structure 118. The second protruding parts 142 are disposed on an annular sidewall of the second positioning hole 140, and the second positioning hole 140 is used for engaging the second positioning pillar 116 and the second protruding parts 142 engaged with the second positioning pillar 116 so that the second buffering structure 118 is fastened to the second positioning pillar 116. The first positioning pillar 106 of this embodiment may be further provided with a first hole 148 located on an upper surface of the first positioning pillar 106. The first buffering structure 108 may further have a first positioning part 150 provided on a bottom of the first positioning hole 134. The first positioning part 150 protrudes from the inner surface of the first positioning hole 134 in the first buffering structure 108 used for inserting into and engaging with the first hole 148 to fasten the first buffering structure 108 to the case 112. In order to effectively engage the first positioning part 150 with the first hole 148, the first buffering structure 108 may further have a plurality of third protruding parts 152, disposed on an annular sidewall of the first positioning part 150. The third protruding parts 152 are also made of a buffering material so that the third protruding parts 152 engage with the first positioning pillar 106 to further fix the first positioning part 150 in the first hole 148. Each third protruding part 152 in this embodiment may also be in a form of a barb, but it is not limited to this. Also, the second positioning pillar 116 of this embodiment may be further provided with a second hole 154. The second buffering structure 118 may further have a second positioning part 156 protruding from the inner surface of the second buffering structure 118 and a plurality of fourth protruding parts 158. And, the first positioning pillar 106, the second positioning pillar 116 and the case 112 in this embodiment are integrally formed. The first positioning pillar 106, the second positioning pillar 116 and the case 112 are made of a material with a certain rigidity, such as a plastic material, but they are not limited to this. The first positioning pillar 106, the second positioning pillar 116 and the case 112 are not limited to being integrally formed. In addition, in order to fix the first buffering structure 108 and the second buffering structure 118 which are fixed to the object 102 to the first positioning pillar 106 and the second positioning pillar 116, the distance between the first positioning pillar 106 and the second positioning pillar 116 is designed in accordance with the distance between the first positioning hole 134 and the second positioning hole 140 when the first buffering structure 108 and the second clamping structure 118 are fixed to the object 102, so that the distance between the centers of the first positioning pillar 106 and the second positioning pillar 116 is roughly the same as the distance between the centers of the first positioning hole 134 and the second positioning hole 140.

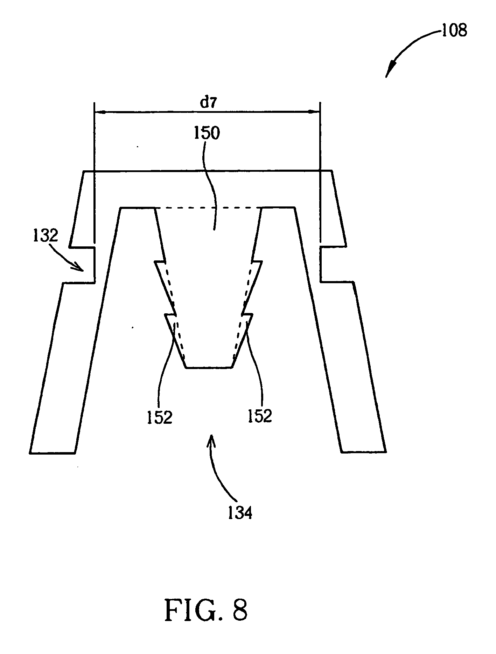

The buffering structure of the present invention is not limited to the protruding parts in the positioning holes. The positioning parts protruding from the bottom of the positioning hole may have protruding parts on their sidewalls. Please refer to FIG. 8, which illustrates another example of the first buffering structure of the fixing mechanism of the first embodiment of the present invention. Referring to FIG. 8, compared with the first buffering structure of the previous embodiments, the first buffering structure 108 of this example is disposed in the first positioning hole 134 and has no protruding parts. In other words, in addition to the first trench 132 and the first positioning hole 134, the first buffering structure 108 of this example has the first positioning part 150 and the third protruding parts 152. The first positioning part 150 protrudes from the bottom of the first positioning hole 134 and is used for inserting into the hole 148 of the first positioning pillar 106. The third protruding parts 152 are disposed on the sidewall of the first positioning part 150. Please note that the third protruding parts 152 engage with the first hole 148 of the first positioning pillar 106 so that the first buffering structure 108 is fixed to the first positioning pillar 106 and the first buffering structure 108 is fastened to the case 112.

Please refer to FIG. 4. The fixing mechanism 100 of the present invention further includes four first reinforcing ribs 144, and each first reinforcing rib 144 is connected to a sidewall of the case 112 and the sidewall of the first positioning pillar 106 to strengthen the first positioning pillar 106 connected to the case 112, so that the first positioning pillar 106 is firmly connected to the case 112. Each first reinforcing rib 144 is respectively disposed in a direction normal to adjacent reinforcing ribs 144, so that the first positioning pillar 106 is evenly reinforced with respect to all directions of the case 112. Please note that the height of the first reinforcing rib 144 is less than that of the first positioning pillar 106, so that each first reinforcing rib 144 may be used to position the depth of the first positioning pillar 106 inserted in the first buffering structure 108. When the first positioning pillar 106 is inserted in the first positioning hole of the first buffering structure 108, the bottom of the first buffering structure 108 stays against each first reinforcing rib 144 to position the depth of the first positioning pillar 106 inserted in the first buffering structure 108. Similarly, the fixing mechanism 100 also further includes four second reinforcing ribs 146, each connected to the case 112 and the sidewall of the first positioning pillar 106. The functions and the structures of the second reinforcing ribs 146 are similar to those of the first reinforcing rib 144 so the details will not be described again. Quantity of the first reinforcing ribs 144 and the second reinforcing ribs 146 is not limited to four, and can be adjusted in accordance with the scenario when the present invention is practiced.

Please continue to refer to FIG. 4 and FIG. 7, which further illustrate the way how the fixing mechanism of the present invention is combined. First, an external force is applied to the two first clamping arms 120 of the first clamping structure 104, so an outward elastic deformation of the first clamping arms 120 is caused to widen the first opening 124. The first trench 132 of the first buffering structure 108 is placed between the two first clamping arms i20 in a direction normal to the first through hole 122 by means of the elastic material of the first buffering structure 108, so that the first clamping arms 120 are engaged within the first trench 132, and the first buffering structure 108 is fixed between the clamping arms 120 by the help of the elastic recovery force of the first clamping arms 120. Also, the first buffering structure 108 may be compressed to go through the first through hole 122 of the two first clamping arms 120, then the first buffering structure 108 is engaged within the first trench 132 after the elastic recovery of the first buffering structure 108 is regained. For the same reason, the second buffering structure 108 can be fixed between the two second clamping arms 126 of the second clamping structure 114 in a similar way. Next, the first positioning part 150 and the second positioning part 156 are respectively inserted into the first hole 148 and the second hole 154. With the engagement of the first protruding parts 136, the second protruding parts 142, the third protruding parts 152 and the fourth protruding parts 158, as well as the first positioning part 150 and the second positioning part 156, the first buffering structure 108 and the second buffering structure 118 are respectively fixed on the first positioning pillar 106 and the second positioning pillar 116. Please note that the first buffering structure 108 and the second buffering structure 118 made of a buffering material are used to connect the object 102 to the case 112. In such a way, the object 102 is connected to the case 112. If the object 102 is a vibrating device, such as a speaker, the first buffering structure 108 and the second buffering structure 118 absorb the vibration coming from the object 102 without passing it to the case 112 and solve the problem of resonance of the case 112. In addition, compared with the screw solution, the fixing mechanism 100 of the present invention makes the first buffering structure 108 and the second buffering structure 118 engage within the first clamping structure 104 and the second clamping structure 114, and fixes the first buffering structure 108 and the second buffering structure 118 on the first positioning pillar 106 and the second positioning pillar 116 to save time for assembling the mechanism. Further, no additional tool is needed for assembling the fixing mechanism 100, so no screws are needed and time for using a screwdriver to assemble the mechanism is saved.

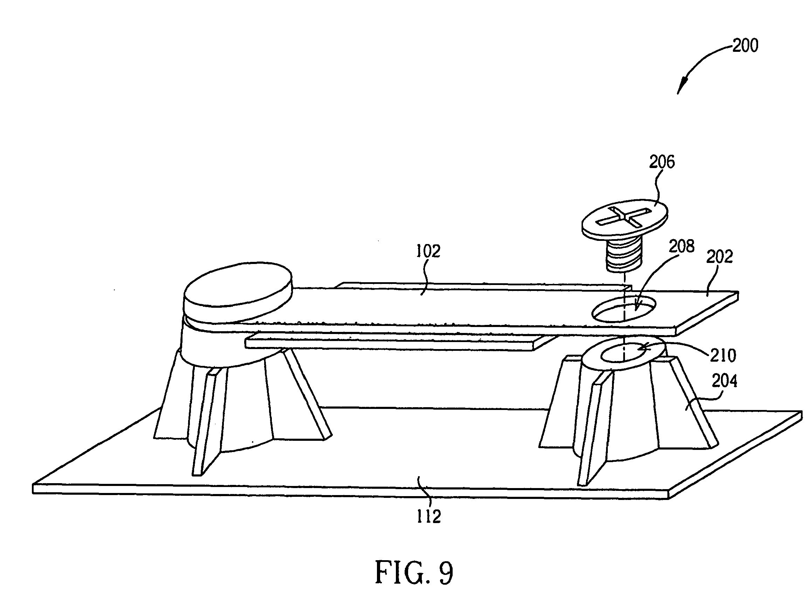

In addition, the fixing structure for fastening the second side of the object is not necessarily the same as the fixing structure for fastening the first side of the object, but may have another configuration. Please refer to FIG. 9, which illustrates a side view of a fixing mechanism according to a second embodiment of the present invention. The same elements or parts in the first and second embodiment share the same reference numerals and the same details will not described again. As shown in FIG. 9, compared with the first embodiment, the fixing structure 110 in the fixing mechanism 200 in the second embodiment includes a first fixing hole part 202, a second fixing hole part 204, and a fixing part 206. The first fixing hole part 202 is provided with a third through hole 208 and is connected to the second side 102b of the object 102. The second fixing hole part 204 is provided a third hole 210 and is connected to the case 112. In this embodiment, the second side 102b of the object 102 uses the fixing part 206 to fix the first fixing hole part 202 to the second fixing hole part 204 so as to lock the second side 102b of the object 102 to the case 112. In addition, the first clamping structure 104, the first positioning pillar 106, and the first buffering structure 108 in the fixing mechanism 200 of this embodiment are the same as the first clamping structure, the first positioning pillar, and the first buffering structure in the first embodiment.

The present invention fixes a buffering structure made of a buffering material to at least one side of the object, and forms a positioning hole disposed on a bottom surface of the buffering structure, so that the positioning pillar on the case may be inserted into the positioning hole and fix the buffering structure to the positioning pillar by means of protruding parts. In such a way, the object is fixed to the case, and if the object is a device which vibrates, the buffering structure absorbs the vibration coming from the object without passing it to the case to solve the problem of resonance of the case, and the present invention also prevents the object from coming off of the case due to its vibration.

## Claims

1. A fixing mechanism (100, 200), used to fasten an object (102) with a first side (102a) and a second side (102b) on a case (112), comprising:
a first clamping structure (104) provided with a first through hole (122) and connected to said first side (102a) of said object (102); and
a first positioning pillar (106) connected to said case (112), **characterized by**:
a first buffering structure (108) provided with a first positioning hole (134) and having a first trench (132) and a plurality of first protruding parts (136), said first trench (132) surrounding a sidewall of said first buffering structure (108) so that said first through hole (122) of said first clamping structure (104) is engaged with said first trench (132) to fasten said first side (102a) of said object (102) on said first buffering structure (108), said first positioning hole (134) being disposed on a bottom surface of said first buffering structure (108), and a plurality of said first protruding parts (136) being disposed on a sidewall of said first positioning hole (134), said first positioning hole (134) being used to be engaged with said first positioning pillar (106) and a plurality of said first protruding parts (136) being engaged with said first positioning pillar (106); and
a fixing structure (110) for fastening said second side (102b) of said object (102) on said case (112).

2. The fixing mechanism (100, 200) of claim 1, **characterized in that** said fixing structure (110) comprises:
a first fixing hole part (202) connected to said second side (102b) of said object (102);
a second fixing hole part (204) connected to said case (112); and
a fixing part (206) for fixing said first fixing hole part (202) to said second fixing hole part (204).

3. The fixing mechanism (100, 200) of claim 1, **characterized in that** said fixing structure (110) comprises:
a second clamping structure (114) provided with a second through hole (128) and connected to said second side (102b) of said object (102);
a second positioning pillar (116) connected to said case (112) ; and
a second buffering structure (118) provided with a second positioning hole (140) and having a second trench (138) and a plurality of second protruding parts (142), said second trench (138) surrounding a sidewall of said second buffering structure (118) so that said second through hole (128) of said second clamping structure (114) is engaged with said second trench (138) to fasten said second side (102b) of said object (102) on said second buffering structure (118), said second positioning hole (140) disposed on a bottom surface of said second buffering structure (118), and a plurality of said second protruding parts (142) disposed on a sidewall of said second positioning hole (140), said second positioning hole (140) used for engaging said second positioning pillar (116) and a plurality of said second protruding parts (142) engaged with said second positioning pillar (116) so that said second buffering structure (118) is fastened to said second positioning pillar (116).

4. The fixing mechanism (100, 200) of claim 1, **characterized in that** said first buffering structure (108) is made of a buffering material so that a plurality of said first protruding parts (136) are engaged with said first positioning pillar (106).

5. The fixing mechanism (100, 200) of claim 4, **characterized in that** said buffering material is rubber.

6. The fixing mechanism (100, 200) of claim 1, **characterized in that** each of said first protruding parts (136) is in a form of a barb.

7. The fixing mechanism (100, 200) of claim 1, **characterized in that** said first positioning pillar (106) is provided with a hole (148) and said first buffering structure (108) has a positioning part (150) protruding from a bottom of said first positioning hole (134) used for inserting into said hole to fasten said first buffering structure (108) to said case (112).

8. The fixing mechanism (100, 200) of claim 7, **characterized in that** said first buffering structure (108) further comprises a plurality of third protruding parts (152) disposed on a sidewall of said positioning part (150).

9. The fixing mechanism (100, 200) of claim 8, **characterized in that** each of said third protruding parts (152) is in a form of a barb.

10. The fixing mechanism (100, 200) of claim 1, **characterized in that** said first clamping structure (104) comprises two clamping arms (120) to clamp said first buffering structure (108) therebetween.

11. The fixing mechanism (100, 200) of claim 10, **characterized in that** said clamping arms have an opening (124) and the width of said opening (124) is less than or equal to the diameter of said first through hole (122).

12. The fixing mechanism (100, 200) of claim 11, **characterized in that** the diameter of said first through hole (122) is substantially equal to the diameter of said first buffering structure (108) in said first trench (132).

13. The fixing mechanism (100, 200) of claim 12, **characterized in that** a cross-sectional area of said first buffering structure (108) outside of said first trench (132) and parallel with said first trench (132) is larger than an area of said first through hole (122).

14. The fixing mechanism (100, 200) of claim 1, further **characterized by**:
at least one reinforcing rib (144, 146) connected to a sidewall of said case (112).

15. A fixing mechanism (100, 200), used to fasten an object (102) with a first side (102a) and a second side (102b) on a case (112), comprising:
a first clamping structure (104) provided with a first through hole (122) and connected to said first side (102a) of said object (102); and
a first positioning pillar (106) provided with a hole (148) and connected to said case (112), **characterized by**:
a first buffering structure (108) provided with a first positioning hole (134) and having a first trench (132), said first trench (132) surrounding a sidewall of said first buffering structure (108) so that said first through hole (122) of said first clamping structure (104) is engaged with said first trench (132) to fasten said first side (102a) of said object (102) on said first buffering structure (108), said first buffering structure (108) further comprising a positioning part (150) protruding from a bottom of said first positioning hole (134) and for inserting into said hole (148) of said first positioning pillar (106) and a plurality of third protruding parts (152) being disposed on a sidewall of said positioning part (150) to engage with said hole (148) of said first positioning pillar (106) so that said first buffering structure (108) is fastened to said first positioning pillar (106) to fasten said first buffering structure (108) to said object (102); and
a fixing structure (110) for fastening said second side (102b) of said object (102) on said case (112).

## Patentansprüche

1. Befestigungsmechanismus (100, 200), der zum Befestigen eines Gegenstandes (102) mit einer ersten Seite (102a) und einer zweiten Seite (102b) auf einem Gehäuse (112) verwendet wird, aufweisend:
- eine erste Klemmanordnung (104), die mit einer ersten Durchgangsbohrung (122) versehen und mit der ersten Seite (102a) des Gegenstandes (102) verbunden ist; und
- eine erste Positioniersäule (106), die mit dem Gehäuse (112) verbunden ist, **gekennzeichnet durch**:
- eine erste Pufferstruktur (108), die mit einer ersten Positionieröffnung (134) versehen ist, und eine erste Vertiefung (132) und eine Mehrzahl von ersten hervorstehenden Teilen (136) aufweist, wobei die erste Vertiefung (132) eine Seitenwand der ersten Pufferstruktur (108) umgibt, sodass die erste Durchgangsöffnung (122) der ersten Klemmanordnung (104) mit der ersten Vertiefung (132) in Eingriff steht, um die erste Seite (102a) des Gegenstandes (102) auf der ersten Pufferstruktur (108) zu befestigen, wobei die erste Positionieröffnung (134) auf einer Bodenfläche der ersten Pufferstruktur (108) angeordnet ist, und eine Mehrzahl von ersten hervorstehenden Teilen (136) auf einer Seitenwand der ersten Positionieröffnung (134) angeordnet ist, wobei die erste Positionieröffnung (134) zum Eingriff mit der ersten Positioniersäule (106) verwendet wird und eine Mehrzahl von ersten hervorstehenden Teilen (106) mit der ersten Positioniersäule (106) in Eingriff steht; und
- eine Befestigungsanordnung (110) zum Befestigen der zweiten Seite (102b) des Gegenstandes (102) auf dem Gehäuse (112).

2. Befestigungsmechanismus (100, 200) gemäß Anspruch 1, **dadurch gekennzeichnet, dass** die Befestigungsanordnung (110) aufweist:
- ein erstes Befestigungsöffnungsteil (202), das mit der zweiten Seite (102b) des Gegenstandes (102) verbunden ist;
- ein zweites Befestigungsöffnungsteil (204), das mit dem Gehäuse (112) verbunden ist; und
- ein Befestigungsteil (206) zum Befestigen des ersten Befestigungsöffnungsteils (202) am zweiten Befestigungsöffnungsteil (204).

3. Befestigungsmechanismus (100, 200) gemäß Anspruch 1, **dadurch gekennzeichnet, dass** die Befestigungsanordnung (110) aufweist:
- eine zweite Klemmanordnung (114), die mit einer zweiten Durchgangsöffnung (128) versehen und mit der zweiten Seite (102b) des Gegenstandes (102) verbunden ist;
- eine zweite Positioniersäule (116), die mit dem Gehäuse (112) verbunden ist; und
- eine zweite Pufferstruktur (118), die mit einer zweiten Positionieröffnung (140) versehen ist, und eine zweite Vertiefung (138) und eine Mehrzahl von zweiten hervorstehenden Teilen (142) aufweist, wobei die zweite Vertiefung (138) eine Seitenwand der zweiten Pufferstruktur (118) umgibt, sodass die zweite Durchgangsöffnung (128) der zweiten Klemmanordnung (114) mit der zweiten Vertiefung (138) in Eingriff steht, um die zweite Seite (102b) des Gegenstandes (102) auf der zweiten Pufferstruktur (118) zu befestigen, wobei die zweite Positionieröffnung (140) auf einer Bodenfläche der zweiten Pufferstruktur (118) angeordnet ist, und eine Mehrzahl von zweiten hervorstehenden Teilen (142) auf einer Seitenwand der zweiten Positionieröffnung (140) angeordnet ist, wobei die zweite Positionieröffnung (140) zum Eingriff mit der zweiten Positioniersäule (116) verwendet wird und eine Mehrzahl von zweiten hervorstehenden Teilen (142) mit der zweiten Positioniersäule (116) in Eingriff steht, sodass die zweite Pufferstruktur (118) an der zweiten Positioniersäule (116) befestigt wird.

4. Befestigungsmechanismus (100, 200) gemäß Anspruch 1, **dadurch gekennzeichnet, dass** die erste Pufferstruktur (108) aus einem Puffermaterial hergestellt ist, sodass eine Mehrzahl von ersten hervorstehenden Teilen (136) mit der ersten Positioniersäule (106) in Eingriff steht.

5. Befestigungsmechanismus (100, 200) gemäß Anspruch 4, **dadurch gekennzeichnet, dass** das Puffermaterial Gummi ist.

6. Befestigungsmechanismus (100, 200) gemäß Anspruch 1, **dadurch gekennzeichnet, dass** jedes der ersten hervorstehenden Teile (136) eine Widerhakenform aufweist.

7. Befestigungsmechanismus (100, 200) gemäß Anspruch 1, **dadurch gekennzeichnet, dass** die erste Positioniersäule (106) mit einer Öffnung (148) versehen ist, und die erste Pufferstruktur (108) ein Positionierteil (150) aufweist, das von einem Boden der ersten Positionieröffnung (134) hervorsteht, das zum Einsetzen in die Öffnung verwendet wird, um die erste Pufferstruktur (108) am Gehäuse (112) zu befestigen.

8. Befestigungsmechanismus (100, 200) gemäß Anspruch 7, **dadurch gekennzeichnet, dass** die erste Pufferstruktur (108) ferner eine Mehrzahl von dritten hervorstehenden Teilen (152) aufweist, die auf einer Seitenwand des Positionierteils (150) angeordnet sind.

9. Befestigungsmechanismus (100, 200) gemäß Anspruch 8, **dadurch gekennzeichnet, dass** jedes der dritten hervorstehenden Teile (152) eine Widerhakenform aufweist.

10. Befestigungsmechanismus (100, 200) gemäß Anspruch 1, **dadurch gekennzeichnet, dass** die erste Klemmanordnung (104) zwei Klemmarme (120) aufweist, um die erste Pufferstruktur (108) dazwischen festzuklemmen.

11. Befestigungsmechanismus (100, 200) gemäß Anspruch 10, **dadurch gekennzeichnet, dass** die Klemmarme eine Öffnung (124) aufweisen und die Breite der Öffnungen (124) kleiner als oder gleich dem Durchmesser der ersten Durchgangsöffnung (122) ist.

12. Befestigungsmechanismus (100, 200) gemäß Anspruch 11, **dadurch gekennzeichnet, dass** der Durchmesser der ersten Durchgangsöffnung (122) im Wesentlichen gleich dem Durchmesser der ersten Pufferstruktur (108) in der ersten Vertiefung (132) ist.

13. Befestigungsmechanismus (100, 200) gemäß Anspruch 12, **dadurch gekennzeichnet, dass** ein Querschnittsbereich der ersten Pufferstruktur (108), der außerhalb der ersten Vertiefung (132) und parallel mit der ersten Vertiefung (132) ist, größer als ein Bereich der ersten Durchgangsöffnung (122) ist.

14. Befestigungsmechanismus (100, 200) gemäß Anspruch 1, ferner **gekennzeichnet durch**:
- zumindest eine Verstärkungsrippe (144, 146), die mit einer Seitenwand des Gehäuses (112) verbunden ist.

15. Befestigungsmechanismus (100, 200), der zum Befestigen eines Gegenstandes (102) mit einer ersten Seite (102a) und einer zweiten Seite (102b) auf einem Gehäuse (112) verwendet wird, aufweisend:
- eine erste Klemmanordnung (104), die mit einer ersten Durchgangsöffnung (122) versehen und mit der ersten Seite (102a) des Gegenstandes (102) verbunden ist; und
- eine erste Positioniersäule (106), die mit einer Öffnung (148) versehen und mit dem Gehäuse (112) verbunden ist, **gekennzeichnet durch**:
- eine erste Pufferstruktur (108), die mit einer ersten Positionieröffnung (134) versehen ist, und eine erste Vertiefung (132) aufweist, wobei die erste Vertiefung (132) eine Seitenwand der ersten Pufferstruktur (108) umgibt, sodass die erste Durchgangsöffnung (122) der ersten Klemmanordnung (104) mit der ersten Vertiefung (132) ein Eingriff steht, um die erste Seite (102a) des Gegenstandes (102) auf der ersten Pufferstruktur (108) zu befestigen, wobei die erste Pufferstruktur (108) ferner ein Positionierteil (150) aufweist, das von einem Boden der ersten Positionieröffnung (134) hervorsteht und in die Öffnung (148) der ersten Positioniersäule (106) eingesetzt wird, und eine Mehrzahl von dritten hervorstehenden Teilen (152) auf einer Seitenwand des Positionierteils (150) angeordnet ist, um mit der Öffnung (148) der ersten Positioniersäule (106) in Eingriff zu stehen, sodass die erste Pufferstruktur (108) an der ersten Positioniersäule (106) befestigt ist, um die erste Pufferstruktur (108 am Gegenstand (102) zu befestigen; und
- eine Befestigungsanordnung (110) zum Befestigen der zweiten Seite (102b) des Gegenstandes (102) auf dem Gehäuse (112).

## Revendications

1. Mécanisme de fixation (100, 200), utilisé pour fixer un objet (102) avec un premier côté (102a) et un deuxième côté (102b) sur un boîtier (112), comprenant :
une première structure de serrage (104) munie d'un premier trou traversant (122) et reliée audit premier côté (102a) dudit objet (102) ; et
un premier pilier de positionnement (106) relié audit boîtier (112), **caractérisé par** :
une première structure d'amortissement (108) munie d'un premier trou de positionnement (134) et ayant une première tranchée (132) et une pluralité de premières parties en saillie (136), ladite première tranchée (132) entourant une paroi latérale de ladite première structure d'amortissement (108) de sorte que ledit premier trou traversant (122) de ladite première structure de serrage (104) soit en prise avec ladite première tranchée (132) pour fixer ledit premier côté (102a) dudit objet (102) sur ladite première structure d'amortissement (108), ledit premier trou de positionnement (134) étant disposé sur une surface inférieure de ladite première structure d'amortissement (108), et une pluralité desdites premières parties en saillie (136) étant disposées sur une paroi latérale dudit premier trou de positionnement (134), ledit premier trou de positionnement (134) étant utilisé pour être en prise avec ledit premier pilier de positionnement (106) et une pluralité desdites premières parties en saillie (136) étant en prise avec ledit premier pilier de positionnement (106) ; et
une structure de fixation (110) pour fixer ledit deuxième côté (102b) dudit objet (102) sur ledit boîtier (112).

2. Mécanisme de fixation (100, 200) de la revendication 1, **caractérisé en ce que** ladite structure de fixation (110) comprend :
une première partie de trou de fixation (202) reliée audit deuxième côté (102b) dudit objet (102) ;
une deuxième partie de trou de fixation (204) reliée audit boîtier (112) ;
et
une partie de fixation (206) pour fixer ladite première partie de trou de fixation (202) à ladite deuxième partie de trou de fixation (204).

3. Mécanisme de fixation (100, 200) de la revendication 1, **caractérisé en ce que** ladite structure de fixation (110) comprend :
une deuxième structure de serrage (114) munie d'un deuxième trou traversant (128) et reliée audit deuxième côté (102b) dudit objet (102) ;
un deuxième pilier de positionnement (116) relié audit boîtier (112) ;
et
une deuxième structure d'amortissement (118) munie d'un deuxième trou de positionnement (140) et ayant une deuxième tranchée (138) et une pluralité de deuxièmes parties en saillie (142), ladite deuxième tranchée (138) entourant une paroi latérale de ladite deuxième structure d'amortissement (118) de sorte que ledit deuxième trou traversant (128) de ladite deuxième structure de serrage (114) soit en prise avec ladite deuxième tranchée (138) pour fixer ledit deuxième côté (102b) dudit objet (102) sur ladite deuxième structure d'amortissement (118), ledit deuxième trou de positionnement (140) disposé sur une surface inférieure de ladite deuxième structure d'amortissement (118), et une pluralité desdites deuxièmes parties en saillie (142) disposées sur une paroi latérale dudit deuxième trou de positionnement (140), ledit deuxième trou de positionnement (140) utilisé pour venir en prise avec ledit deuxième pilier de positionnement (116) et une pluralité desdites deuxièmes parties en saillie (142) étant en prise avec ledit deuxième pilier de positionnement (116) de sorte que ladite deuxième structure d'amortissement (118) soit fixée audit deuxième pilier de positionnement.

4. Mécanisme de fixation (100, 200) de la revendication 1, **caractérisé en ce que** ladite première structure d'amortissement (108) est réalisée en un matériau d'amortissement de sorte qu'une pluralité desdites premières parties en saillie (136) soient mises en prise avec ledit premier pilier de positionnement (106).

5. Mécanisme de fixation (100, 200) de la revendication 4, **caractérisé en ce que** ledit matériau d'amortissement est du caoutchouc.

6. Mécanisme de fixation (100, 200) de la revendication 1, **caractérisé en ce que** chacune desdites premières parties en saillie (136) se présente sous la forme d'un d'ardillon.

7. Mécanisme de fixation (100, 200) de la revendication 1, **caractérisé en ce que** ledit premier pilier de positionnement (106) est muni d'un trou (148) et ladite première structure d'amortissement (108) a une partie de positionnement (150) faisant saillie à partir d'un fond dudit premier trou de positionnement (134) utilisée pour être insérée dans ledit trou pour fixer ladite première structure d'amortissement (108) audit boîtier (112).

8. Mécanisme de fixation (100, 200) de la revendication 7, **caractérisé en ce que** ladite première structure d'amortissement (108) comprend en outre une pluralité de troisièmes parties en saillie (152) disposées sur une paroi latérale de ladite partie de positionnement (150).

9. Mécanisme de fixation (100, 200) de la revendication 8, **caractérisé en ce que** chacune desdites troisièmes parties en saillie (152) se présente sous la forme d'un d'ardillon.

10. Mécanisme de fixation (100, 200) de la revendication 1, **caractérisé en ce que** ladite première structure de serrage (104) comprend deux bras de serrage (120) pour serrer ladite première structure d'amortissement (108) entre ceux-ci.

11. Mécanisme de fixation (100, 200) de la revendication 10, **caractérisé en ce que** lesdits bras de serrage ont une ouverture (124) et la largeur de ladite ouverture (124) est inférieure ou égale au diamètre dudit premier trou traversant (122).

12. Mécanisme de fixation (100, 200) de la revendication 11, **caractérisé en ce que** le diamètre dudit premier trou traversant (122) est sensiblement égal au diamètre de ladite première structure d'amortissement (108) dans ladite première tranchée (132).

13. Mécanisme de fixation (100, 200) de la revendication 12, **caractérisé en ce qu'**une zone transversale de ladite première structure d'amortissement (108) à l'extérieur de ladite première tranchée (132) et parallèle à ladite première tranchée (132) est plus grande qu'une zone dudit premier trou traversant (122).

14. Mécanisme de fixation (100, 200) de la revendication 1, **caractérisé en outre par** :
au moins une nervure de renforcement (144, 146) reliée à une paroi latérale dudit boîtier (112).

15. Mécanisme de fixation (100, 200), utilisé pour fixer un objet (102) avec un premier côté (102a) et un deuxième côté (102b) sur un boîtier (112), comprenant :
une première structure de serrage (104) munie d'un premier trou traversant (122) et reliée audit premier côté (102a) dudit objet (102) ; et
un premier pilier de positionnement (106) muni d'un trou (148) et relié audit boîtier (112), **caractérisé par** :
une première structure d'amortissement (108) munie d'un premier trou de positionnement (134) et ayant une première tranchée (132), ladite première tranchée (132) entourant une paroi latérale de ladite première structure d'amortissement (108) de sorte que ledit premier trou traversant (122) de ladite première structure de serrage (104) soit mis en prise avec ladite première tranchée (132) pour fixer ledit premier côté (102a) dudit objet (102) sur ladite première structure d'amortissement (108), ladite première structure d'amortissement (108) comprenant en outre une partie de positionnement (150) faisant saillie à partir d'un fond dudit premier trou de positionnement (134) et devant être insérée dans ledit trou (148) dudit premier pilier de positionnement (106) et une pluralité de troisièmes parties en saillie (152) étant disposées sur une paroi latérale de ladite partie de positionnement (150) pour venir en prise avec ledit trou (148) dudit premier pilier de positionnement (106) de sorte que ladite première structure d'amortissement (108) soit fixée audit premier pilier de positionnement (106) pour fixer ladite première structure d'amortissement (108) audit objet (102) ; et
une structure de fixation (110) pour fixer ledit deuxième côté (102b) dudit objet (102) sur ledit boîtier (112).
